# FASCICULE DE BREVET EUROPEEN

(11) **EP 2 098 387 B1**
(45) Date de publication et mention de la délivrance du brevet: **18.04.2012**
(21) Numéro de dépôt: 09007334.7
(22) Date de dépôt: 13.09.2006
(51) Int. Cl.: B62D 7/15, B62D 9/00, E01H 1/00, B60G 9/04

(54) **Véhicule de nettoyage**
Reinigungsfahrzeug
Cleaning vehicle

(30) Priorité: 28.09.2005 FR 0509875; 16.11.2005 FR 0511587
(43) Date de publication de la demande: 09.09.2009
(62) Demande divisionnaire de: 06366004.7
(73) Titulaire: Mathieu, 54200 Toul (FR)
(72) Inventeur: Rouxel, Antoine, 54600 Villers Les Nancy (FR); Desreumaux, Yann, 54520 Laxou (FR)
(74) Mandataire: Poupon, Michel

(56) Documents cités:
- EP-A- 0 375 409
- EP-A- 1 136 343
- EP-A- 1 243 497
- WO-A-97/26170
- FR-A- 2 808 733
- SU-A1- 492 403
- US-A- 2 139 185
- US-A- 4 770 264
- US-A- 6 086 074

## Description

La présente invention concerne un véhicule automoteur pour le balayage-nettoyage de voirie du type comportant une cabine de pilotage et pouvant circuler sur des voies de circulation automobile.

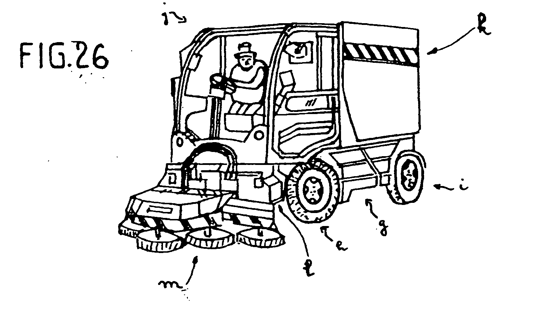

Des véhicules de ce type existent déjà et la demanderesse a déjà obtenus plusieurs brevets perfectionnant ces véhicules. Ils se composent principalement (voir figure 26) d'un châssis (g) monté sur un essieu avant (h) et un essieu arrière (i) et portant à l'avant une cabine de pilotage (j) accueillant un conducteur et éventuellement un passager, et à l'arrière une cuve (k) de collecte des déchets. Lesdits déchets sont collectés et conduits dans la cuve, par un ensemble de brossage (m) monté à l'avant de la cabine, vers une buse d'aspiration débouchant sous la cabine et constituant l'extrémité d'un conduit d'aspiration reliant ladite buse à une turbine d'aspiration préférentiellement située en haut de la cuve et à l'intérieur de celle-ci. Des éléments fonctionnels supplémentaires tels que rampe d'arrosage, dispositif d'aspiration d'eau résiduelle, peuvent être ajoutés entre l'ensemble de brossage et la buse d'aspiration.

La demanderesse a développé un nouveau modèle de véhicule de ce type à partir d'un nouveau cahier des charges imposant de réduire en priorité la largeur du véhicule tout maintenant sa hauteur et en lui conservant une excellente stabilité.

A titre indicatif la largeur imposée au véhicule est d'être inférieure à 1,6 m pour pouvoir circuler dans des ruelles.

Le problème à résoudre par l'invention est de concevoir un nouveau véhicule de balayage-nettoyage de voirie étroit et conservant une cabinet pour le conducteur, ainsi qu'une benne de grande capacité, véhicule pouvant en outre être stable même en roulant à vitesse élevée sur route. Les différents développements au niveau des suspensions et d'un système de blocage de l'essieu arrière contribuent en combinaisons à résoudre les problèmes de stabilité engendrés par l'étroitesse du véhicule et la hauteur du centre de gravité.

On comprendra mieux l'invention et les problèmes qu'elle résout grâce à la description ci-après et les figures annexées.

Le premier développement de l'invention concerne plus particulièrement un dispositif de blocage pour l'essieu arrière dudit véhicule, le véhicule étant un véhicule à quatre roues directrices. EP 1 243 497 présente un véhicule avec un essieu arrière avec des roues directionnelles.

Ce type de véhicule roule habituellement à vitesse réduite, même lorsqu'il n'est pas en situation de nettoyage.

La demanderesse s'est fixée pour objectif de concevoir un véhicule de nettoyage pouvant rouler à la vitesse de 80 km/heure sur route.

Il est connu d'équiper les balayeuses roulant à vitesse réduite de quatre roues directrices leur conférant un rayon de braquage plus court que celui des balayeuses à deux roues directrices, et leur permettant d'évoluer dans des ruelles étroites et de contourner au plus près le mobilier urbain. Cet équipement rend le véhicule très maniable à faible vitesse, lors d'une phase de travail, mais constitue un risque et un point critique en terme de stabilité au-dessus d'un certain seuil de vitesse.

La solution retenue par la demanderesse est de définir deux modes de fonctionnement, à savoir :
- un mode travail pour lequel la vitesse du véhicule est inférieure à 25 km/heure privilégiant la maniabilité avec l'utilisation de quatre roues directrices,
- un mode route pour lequel la vitesse du véhicule est supérieure à 25 km/heure, avec les roues avant directrices et l'essieu arrière aligné et bloqué.

Des dispositifs de blocage d'essieu sont connus. La demanderesse a développé un dispositif spécifique décrit ci-après.

Principalement, le premier développement de l'invention consiste en un véhicule de nettoyage de voirie avec un châssis portant une cabine de pilotage et équipé de quatre roues directrices, le mouvement de la direction avant du véhicule étant assuré par des éléments mécaniques et hydrauliques (vérins et barres) et la direction arrière étant asservie à la direction avant suivant le même principe avec des vérins de direction et des barres ou biellettes associées à l'essieu arrière, caractérisé en ce qu'il comporte un dispositif de blocage mécanique de l'essieu arrière formé d'une interface mécanique composée d'une platine inférieure, pivotante et d'une platine supérieure fixe, et d'un vérin de blocage vertical combiné à un ressort et équipé en sous face d'un joint réalisant l'étanchéité entre les deux interfaces de telle sorte que :
- lorsque le véhicule est en mode travail, la pression hydraulique présente dans le vérin de blocage s'oppose à l'effort du ressort, le piston du vérin étant en position haute, et la platine reliant les barres de direction pouvant alors pivoter,
- lorsque lé véhicule est en mode route, le vérin de blocage n'est plus alimenté en puissance hydraulique et lorsque les roues avant et arrières sont alignées, la tête du piston traverse un logement de la platine supérieure et se bloque dans un logement conique de la platine inférieure ce qui entraîne le blocage de l'essieu arrière.

Préférentiellement, le véhicule comporte un système d'asservissement de l'angle des roues arrières sur l'angle des roues avant qui pilote un bloc hydraulique des vérins de direction arrière.

En outre et de façon préférentielle, on prévoit qu'en cas de dysfonctionnement hydraulique le vérin de blocage est automatiquement désactivé.

On comprendra mieux ce premier développement de l'invention à l'aide de la description ci-après faite en référence aux figures annexées suivantes :
- la figure 1 est un schéma de principe du système de blocage selon l'invention équipant un essieu arrière en vue de face,
- la figure 2 est une vue de dessus du schéma de principe de la figure 1,
- la figure 3 représente le détail référencé A sur la figure 1,
- la figure 4 représente en perspective le montage du vérin de blocage sur une platine fixe de l'interface de blocage selon un mode de réalisation préféré.

De façon classique, le mouvement de la direction avant d'un véhicule selon l'invention est assuré par des éléments mécaniques et hydrauliques (vérins et barres) et la direction arrière est asservie à la direction avant suivant le même principe avec des vérins de direction (101, 102) et des barres ou biellettes (103, 104) associées à l'essieu arrière (105).

Afin de sécuriser le comportement routier à vitesse supérieure à 25 km/heure, il a été développé :
- un système permettant de réaliser un châssis quatre roues directrices sans liaison mécanique avant/arrière en raison du manque de place due à la compacité du véhicule ; il s'agit d'un système électronique permettant l'asservissement de l'arrière sur l'avant, et se devant d'être très réactif, en outre, il doit permettre de passer du mode route au mode travail et inversement en toute sécurité et en déclenchant un système de blocage (106) mécanique de l'essieu arrière.
- un système de blocage mécanique (106) fonctionnant dans tous les cas de figure, y compris en cas de défaillance du système d'asservissement.

Le système de blocage mécanique (106) présenté sur les figures se compose de :
- une interface mécanique (107) composée d'une platine inférieure (108) horizontale pivotante dans un plan horizontal, et surmontée d'une platine supérieure horizontale (109) et fixe. Les vérins (101) et (102) sont fixés d'une part à l'essieu arrière et d'autre part à la platine supérieure fixée sous un vérin de blocage (116) décrit plus loin. Cette platine supérieure fixe (109) est traversée par un logement cylindrique vertical (110) positionné dans l'axe (122) d'un piston (114) du vérin de blocage. La platine inférieure (108) est rendue mobile en rotation autour d'un axe vertical (123) sous l'action des vérins (101, 102) et barres (103, 104) et elle comporte un logement conique (111) traversant et décentré par rapport audit axe (123). Le dit alésage conique (111) décrit, au cours du mouvement de la platine inférieure (108), une trajectoire en arc de cercle (124) de part et d'autre d'une position médiane où il se trouve aligné avec l'axe du logement cylindrique (110). Le logement conique débouche de part et d'autre de la platine mobile et son diamètre supérieur et au moins égal au diamètre du logement cylindrique (110) et va en diminuant vers le bas,
- un vérin de blocage (116) dont le corps (112) alimenté hydrauliquement par son entrée (113), est fixé sur la platine supérieure (109) de sorte que le piston (114) soit disposé verticalement et que la tête (115) tronconique dudit piston puisse se déplacer en translation dans les logements (110 et 111). Les dimensions de la tête (115) sont prévues pour que celle-ci puisse descendre et pénétrer dans le logement conique (111) et s'y bloquer en position basse,
- un ressort (117) comprimé en position travail en dessous d'une vitesse prédéterminée (V < 25 km/heure par exemple) entre l'extrémité du piston (114) et une butée ou coffret (118) et exerçant sur celle-ci une force verticale (119) dirigée vers le bas,
- un joint racleur (128) annulaire disposé à la surface de contact entre la platine fixe et la platine mobile dont la fonction est d'empêcher la poussière et la graisse d'obstruer le logement conique (111), ce qui pourrait perturber le mouvement de la tête (115),
- au moins un capteur, et de préférence deux capteurs fin de course (120, 121) disposés sur le corps du vérin de blocage et détectant la position basse du piston (114) et en outre la position haute pour sécuriser le système en cas de défaillance de l'un deux.

Le dispositif de blocage fonctionne comme suit :

Lorsque le véhicule est en mode travail, pour réaliser ses fonctions de balayage lavage et autres, les quatre roues sont directrices ; la pression hydraulique présente dans le vérin de blocage (116) s'oppose à l'effort du ressort (117), le piston (114) est en position haute. La platine inférieure reliant les barres de direction (103, 104) peut pivoter librement sous l'action des vérins hydrauliques pris en points fixes sur l'essieu et la platine fixe.

Le système électronique d'asservissement, asservit l'angle des roues arrière sur l'angle des roues avant en fonction de l'angle de braquage de l'essieu avant, de façon connue en soi. En plus, ce système électronique pilote un bloc hydraulique d'alimentation des vérins de direction arrière (101, 102) juste suffisamment de manière à obtenir un braquage correspondant de l'essieu arrière, ce système est très réactif car corrige en continu l'angle de braquage arrière par rapport à l'angle de braquage avant.

Lorsque le conducteur du véhicule décide de passer en mode route (donc au-dessus de la vitesse V prédéterminée), il attend que des capteurs d'angles non représentés et placés sur les roues signalent que les roues sont alignées avec l'axe du véhicule, puis il déclenche le vérin de blocage (116) en coupant son alimentation hydraulique (113). La tête (115) du piston descend et se bloque dans le logement conique (111) provoquant le blocage de l'essieu arrière.

Lorsque le conducteur décide de repasser au mode travail, il ralentit le véhicule et lorsque celui-ci roule en dessous de la vitesse V, il alimente à nouveau le vérin de blocage pour provoquer la remontée du piston et débloquer l'essieu arrière.

En cas de dysfonctionnement hydraulique, l'entrée (113) est fermée et automatiquement le vérin de blocage (116) n'est plus alimenté en puissance hydraulique, c'est donc le ressort (117) qui agit seul. Le piston descend alors au contact de la platine inférieure dès que les roues sont alignées et le conducteur ne peut plus passer en mode travail.

Ce dispositif mécanique de blocage est un gage de sécurité. En outre, les capteurs d'angle non représentés des roues avant sont désactivés par la descente du vérin dont la fin de course est détectée par les capteurs (120, 121).

Ce système à fonctionnement par manque de pression, représente un avantage en terme de sécurité, la capacité de blocage de l'essieu n'est en rien altérée (grâce au ressort) et évite tout roulage en quatre roues directrices en cas de panne hydraulique.

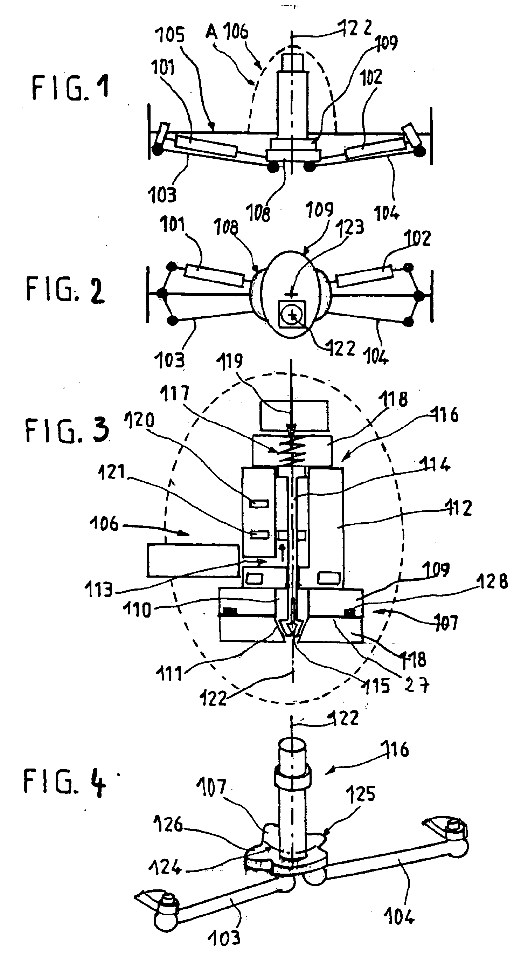

Les figures 1 à 3 représentent symboliquement les platines (108) et (109) sous forme d'ellipses, mais toute autre forme appropriée peut être envisagée, notamment la forme préférée mais non limitative de la platine supérieure montrée en figure (11). Cette forme comporte deux épanouissements latéraux (125, 126) de manière à couvrir complètement une zone (127) de recouvrement autour de la trajectoire (124) du logement conique et de largeur supérieure au diamètre supérieur dudit logement. Le joint racleur (128) est disposé de telle sorte qu'il protège en totalité cette zone (127).

Le deuxième développement de l'invention concerne un dispositif de suspension pour ce véhicule de nettoyage-balayage.

Ce type de véhicule roule habituellement à vitesse réduite même lorsqu'il n'est pas en situation de nettoyage. Afin de permettre une vitesse de circulation plus élevée, de l'ordre de 80 Km/h sur route, il faut résoudre un certain nombre de problèmes de stabilité surtout dans les virages, problèmes accentués si le véhicule est étroit.

Parmi les causes des différents problèmes de stabilité engendrés, on note en particulier :
- évolution du centre de gravité avec l'utilisation (en fonction de l'état de remplissage de la benne de récupération),
- remous ou mouvements dans le volume d'eau quand le véhicule est transformé en laveuse,
- étroitesse de la machine (à titre indicatif : voie inférieure à 1,6 m pour passer dans des ruelles),
- hauteur du véhicule pour avoir une capacité de ramassage maximale,
- déport limité des ressorts amortisseurs en raison du gabarit de la machine,
- espace disponible réduit autour des roues pour la réalisation d'une suspension efficace (concept de véhicule extra compact, c'est-à-dire dans lequel tous les organes mécaniques et moteurs sont rapprochés le plus possible les uns des autres sans perte de place),
- problèmes supplémentaires sur l'essieu avant en raison de la présence de la cabine de pilotage au-dessus des roues et de l'emplacement du tuyau d'aspiration entre les roues.

Tous ces points font qu'une balayeuse à déplacement rapide est instable.

Afin de concevoir un véhicule stable et évoluant en toute sécurité, la demanderesse a réalisé une analyse fine des systèmes de suspension pour véhicule étroit, et à centre de gravité évolutif en cours d'utilisation.

A partir des concepts existants et de l'environnement, il a fallu développer une liaison au sol spécifique pour la balayeuse selon l'invention.

L'objectif est donc de réaliser un système de suspension permettant de stabiliser au mieux un véhicule aux voies étroites et au centre de gravité élevé.

Il faut donc développer un système qui puisse réaliser cet objectif dans un encombrement réduit, sans dégrader les capacités directionnelles et le confort de roulage du véhicule tout en améliorant sa tenue de route.

Cet objectif est atteint par l'invention qui consiste en un véhicule automoteur pour le nettoyage de surfaces de voiries, du type comportant principalement un châssis monté sur un train de roues avant et un train de roues arrière et portant une cabine de conduite à l'avant, une cuve de collecte des déchets et sa turbine d'aspiration reliée à un tube d'aspiration traversant le châssis et débouchant dans une buse d'aspiration au-dessus de la surface à nettoyer et derrière un ensemble de brossage réalisant une fonction de balayage de la surface, ledit véhicule pouvant en outre être équipé de moyens réalisant des fonctions supplémentaires de nettoyage de la surface comme par exemple un lavage de celle-ci, véhicule dont les trains de roues comportent un système de suspension à ressorts, caractérisé en ce qu'il comporte un système de liaison entre le châssis et un essieu d'un train de roue maintenant les ressorts verticaux avec un entraxe calqué sur la voie du véhicule.

On comprendra mieux le deuxième développement de l'invention à l'aide de la description ci-après et des figures annexées suivantes :

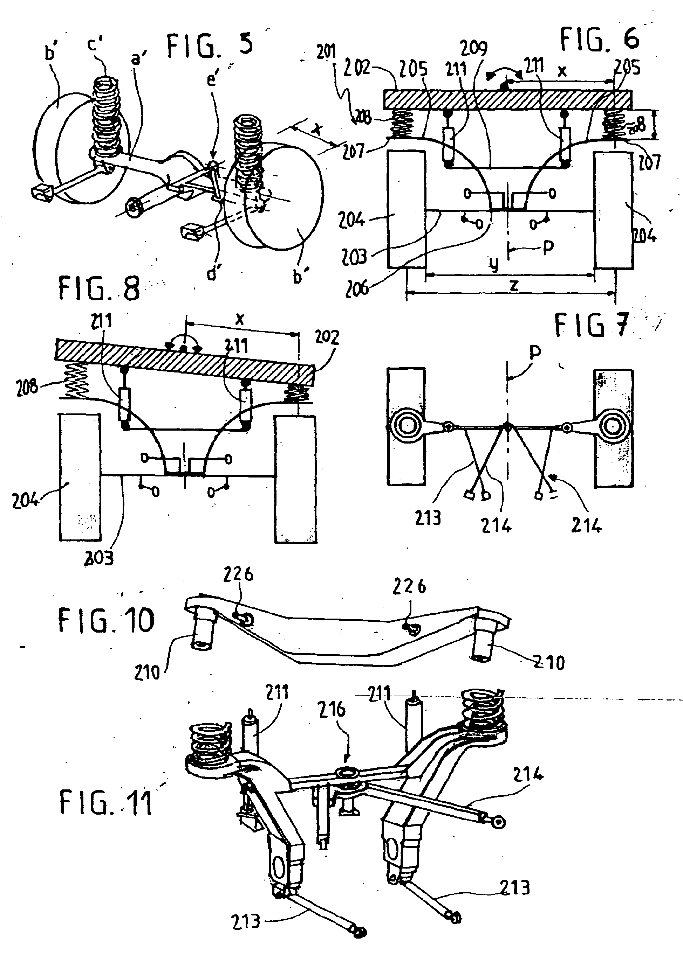

- Figure 5 : schéma d'un système de suspension classique de l'art antérieur,
- Figure 6 : vue de face schématique d'un dispositif selon l'invention appliquée sur un train arrière d'un véhicule selon l'invention, lors d'un déplacement rectiligne,
- Figure 7 : vue de dessus schématique du dispositif de la figure 6,
- Figure 8 : vue de face du dispositif de la figure 6, lors d'un virage,

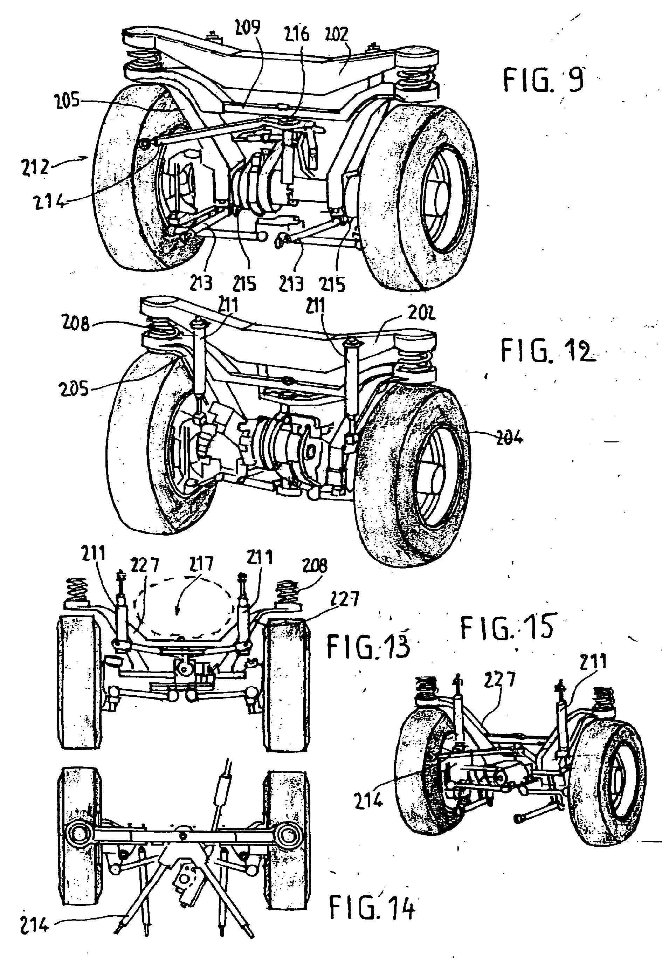

- Figure 9 : vue générale d'un train arrière complet selon l'invention et selon le principe de la figure 6,
- Figure 10 : vue générale d'une barre transversale de châssis intégrée au train arrière selon la figure 9,
- Figure 11 : vue générale d'une suspension pour train arrière selon la figure 9,
- Figure 12 : vue générale du train arrière de la figure 9 selon un angle de vue opposé,
- Figure 13 : vue de face d'une première variante de réalisation d'un train avant d'un véhicule selon l'invention,
- Figure 14 : vue de dessus du train avant de la figure 13,
- Figure 15 : vue générale du train avant des figures 13 et 14,

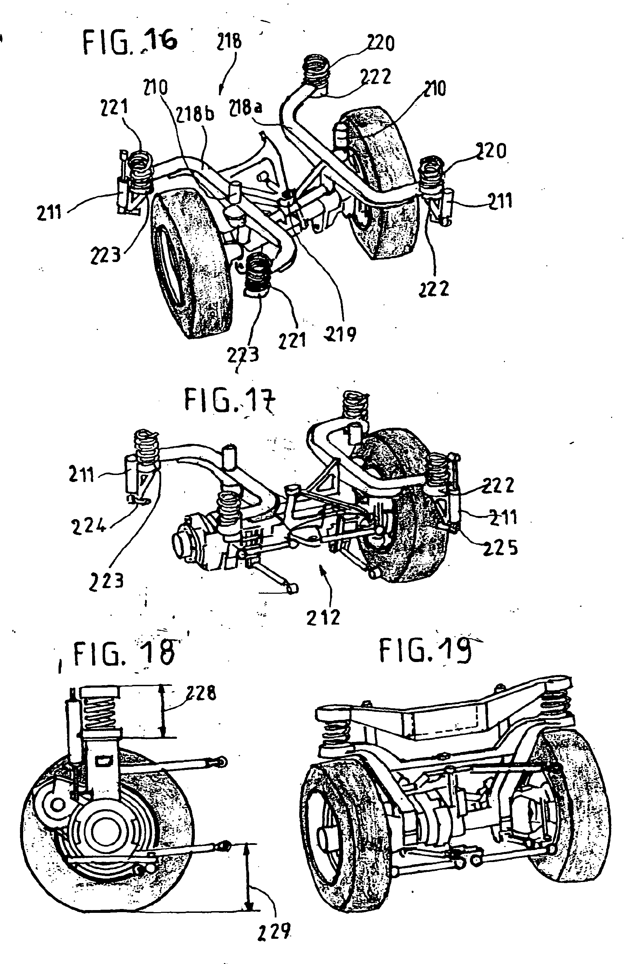

- Figure 16 : vue générale d'une deuxième variante de réalisation d'un train avant d'un véhicule selon l'invention,
- Figure 17 : vue partielle du train avant de la figure 16,
- Figures 18 et 19 : vues montrant le train arrière de la figure 9 lorsque le véhicule circule à vide,

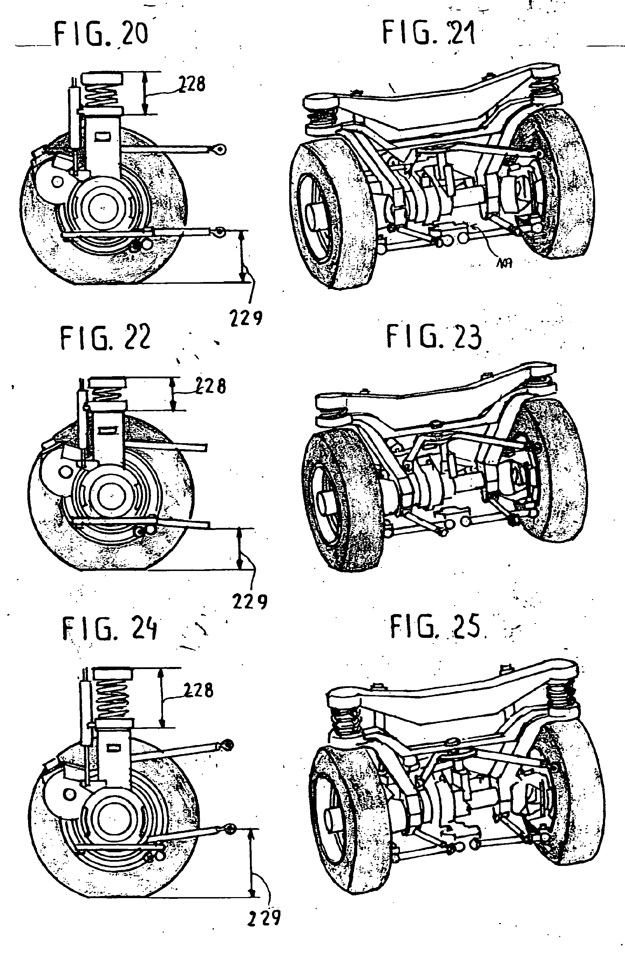

- Figures 20 et 21 : vues montrant le train arrière de la figure 9 lorsque le véhicule circule en pleine charge,
- Figures 22 et 23 : vues montrant le train arrière de la figure 9 lorsque le véhicule encaisse un choc en roulant sur un obstacle,
- Figures 24 et 25 : vues montrant le train arrière de la figure 9 en position de détente maximale.

On se rapporte d'abord à la figure 5 montrant un dispositif de suspension de l'état de la technique.

Il est composé principalement de deux ressorts (c') montés entre un essieu (a') portant les roues (b') et un châssis non représenté, et d'un système de triangulation (d') de suspension monté par un système à rotule (e') sur l'essieu (a').

Le point de pivot du roulis se situe sur le plan médian du châssis.

La cote de bras de levier (x) et la raideur du ressort (c') déterminent l'angle de roulis maximal à charges équivalentes.

Le but recherché par la demanderesse est de réaliser un train avec un système de suspension à ressorts, qui permette de réduire la largeur du véhicule, tout en répondant à toutes les contraintes indiquées précédemment.

Ce but est atteint de manière différente pour le train avant et pour le train arrière en raison des contraintes de présence d'une cabine de conduite et d'un tuyau d'aspiration à proximité du train avant.

On se rapporte à présent aux figures 6 à 12 correspondant à la solution adoptée pour un train arrière d'un véhicule selon l'invention.

Un train arrière selon l'invention comporte un système de suspension (201) à ressorts, en liaison avec d'une part une barre transversale ou traverse (202) de châssis et d'autre part avec un essieu (203) de roues (204).

La liaison entre la traverse de châssis (202) et l'essieu (203) est réalisée par deux armatures de déport (205) fixes, dont une extrémité (206) est montée fixe sur l'essieu (203) et entre les deux roues, et dont l'autre extrémité (207) est placée au-dessus d'une roue et porte une extrémité de la traverse de châssis par l'intermédiaire d'un ressort (208) travaillant en compression.

Les deux armatures de déport (205) sont placées symétriquement par rapport au plan médian (P) du châssis du véhicule, et leur forme et leurs dimensions permettent de surélever les ressorts et de les placer à l'aplomb des roues, tout en permettant de réduire l'écartement des roues par rapport à une conception standard et tout en maintenant la cote (x) à la valeur choisie par le calcul du roulis. (Voir figures 5, 6 et 8).

Préférentiellement, le dispositif à ressort est complété par deux butées en caoutchouc (210) montées à l'intérieur de chacun des ressorts pour limiter le déplacement vertical de la traverse (202) en cas de choc, tout en jouant un rôle dans l'amortissement.

Ainsi, lors d'un choc ou d'une prise de roulis en virage (consécutif à la force centrifuge), l'effort appliqué au ressort de suspension est proportionnel à la cote (x) et en détermine la flèche (figure 8).

L'entraxe important des amortisseurs détermine également la rapidité à laquelle les mouvements de balancier de la caisse seront contenus.

Préférentiellement, le train arrière selon l'invention comporte encore un dispositif amortisseur composé de deux vérins amortisseurs (211), chacun monté verticalement, entre d'une part des paliers (226) de la traverse de châssis (202) et d'autre part une des armatures de déport (205), sur l'exemple de la figure 18.

L'écartement des deux vérins peut également être maintenu par une barre horizontale (209) comme sur la figure 6.

Dans l'invention, la cote (x) étant identique au demi-écartement des roues au lieu de lui être nettement inférieure comme dans la conception standard, ladite cote exige moins de raideur et une capacité d'amortissement plus faible, à poids de véhicule équivalent, ce qui permet de réduire les dimensions des ressorts et des amortisseurs.

L'entraxe des ressorts (2x) est calqué sur la voie du véhicule (c'est-à-dire que la valeur 2x est supérieure à l'écartement des roues) voire sensiblement égal à l'entraxe z desdites roues, permettant de réduire l'effort sur les ressorts, de même l'entraxe important des amortisseurs permet de stabiliser et d'amortir plus rapidement la caisse.

Le train arrière selon l'invention est en outre suspendu par un ensemble de suspension (212) formé d'une part de deux bielles inférieures de guidage (213) montées sous l'essieu (203) par des systèmes à pivots (215) et pouvant pivoter dans un plan parallèle au châssis et d'autre part d'un triangle supérieur (214), formé de deux bielles en V (214), et monté par un système à pivot (216) sous la barre horizontale (209) du système de suspension.

Les bielles inférieures (213) encaissent l'effort longitudinal du véhicule lié à l'amortissement, et permettent le mouvement vertical de l'essieu par les pivots (215).

Le triangle supérieur (214) permet d'encaisser les efforts latéraux du véhicule et permet aussi d'encaisser les déplacements verticaux de l'essieu par le pivot (216).

On se rapporte à présent aux figures 13 à 17 correspondant à des solutions adoptées pour un train avant d'un véhicule selon l'invention.

Pour un train avant, il faut tenir compte d'une contrainte supplémentaire à savoir la position et l'encombrement d'un conduit d'aspiration (de l'ordre de 250 mm de diamètre) en position centrale juste au-dessus de l'essieu avant et d'une cabine de conduite très proche longitudinalement des roues.

Il faut donc libérer une zone (217) spécifique, repérée approximativement par des pointillés, dans la partie supérieure du système de suspension (201) et la demanderesse propose deux variantes de réalisation pour répondre à cette contrainte supplémentaire.

Selon une première variante des figures 20 à 22, le dispositif amortisseur comporte comme précédemment deux vérins amortisseurs (211), chacun monté verticalement entre la cabine supérieure et les structures de déport (205).

La traverse supérieure (202) et les structures de déport (205) de la liaison entre le châssis et l'essieu sont remplacées par une structure en "U" évasée vers le haut (227), reprenant la base des ressorts (208) et permettant de dégager une zone (217) entre les vérins (211) pour le passage du tuyau et de la base d'inspiration fixe du véhicule.

L'ensemble de suspension (212) n'est pas modifié car le triangle supérieur (214) ne gêne pas le passage des roues.

La cabine de conduite non-représentée est positionnée au-dessus des roues.

Selon une deuxième variante des figures 16 à 17, les ressorts sont dédoublés et disposés par paire sur le devant et sur l'arrière de chaque roue, dans une position abaissée par rapport au sommet d'une roue.

Une structure pivotante (218) montée sur le pivot central (219) de l'essieu comporte deux bras (218a et 218b) disposés parallèlement au plan de roulement d'une roue et à l'intérieur de celle-ci. Chacun des bras ayant ses extrémités recourbées à 90° et portant chacune un ressort, de telle sorte que chaque paire de ressorts (220 et 221) puisse pivoter dans un plan horizontal, autour d'une roue pendant chaque opération de braquage. Chaque ressort (220 et 221) est monté en compression entre un plateau (222, 223) solidaire d'une extrémité d'un bras (218a, 218b) et la sous-face du châssis non-représentée du véhicule, et peut être équipée comme précédemment d'une butée (210) intérieure en caoutchouc.

Cette disposition des ressorts permet d'obtenir un entraxe des ressorts important sans occuper l'espace au-dessus de la roue et permet d'abaisser la cabine et ainsi de réduire la hauteur de la caisse du véhicule.

En outre, les vérins amortisseurs (211) sont déportés pour permettre le braquage des roues, ils sont prévus entre la sous-face du châssis et une patte (224 ou 225) fixée sous un des plateaux (222 ou 223) de chaque structure pivotante (218).

L'ensemble de suspension (212) n'est pas modifié.

Les figures 18 à 25 montrent quelques exemples de situation d'un essieu arrière selon l'invention pouvant se produire au cours du travail du véhicule qui en est équipé, les flèches (229) et (228) montrent les amplitudes des amortissements et des ressorts.

En figures 18 et 19, le véhicule est en ordre de marche et sa benne de collecte de détritus ou d'eau est vide.

En figure 20 et 21, le véhicule est en pleine charge.

Les figures 24 et 25 montrent le mouvement de détente des bielles d'amortissement après un choc subi par le véhicule en figure 22 et 23.

Un véhicule dont les essieux sont équipés d'un dispositif de blocage d'essieux objet de la présente demande et qui sont en outre équipés des systèmes de suspensions décrits peut avoir une largeur inférieure à 1,60 m une cabine de conduite accueillant un conducteur, une benne arrière aussi haute que la cabine afin de conserver une bonne capacité de ramassage, une bonne stabilité même à grande vitesse, et peut rouler en toute sécurité aussi bien à faible vitesse de travail, qu'à vitesse plus élevée sur route.

Bien entendu ces équipements peuvent également, et à l'inverse, être prévus sur des véhicules plus larges dont on souhaite augmenter la surface de balayage et/ou la stabilité et éventuellement en diminuer la hauteur de cuve à volume égal.

## Revendications

1. Véhicule de nettoyage de voirie **caractérisé en ce qu'**il est du type comportant un châssis portant une cabine de pilotage et équipé de quatre roues directrices, le mouvement de la direction avant du véhicule étant assuré par des éléments mécaniques et hydrauliques (vérins et barres) et la direction arrière étant asservie à la direction avant suivant le même principe avec des vérins de direction (101, 102) et des barres ou biellettes (103, 104) associées à l'essieu arrière (105), et **caractérisé en ce qu'**il comporte un dispositif de blocage mécanique (106) de l'essieu arrière formé d'une interface mécanique (107) composée d'une platine inférieure, pivotante et d'une platine supérieure (109) fixe, et d'un vérin de blocage (116) vertical combiné à un ressort (117) et équipé d'un joint (118) réalisant l'étanchéité entre les deux platines de telle sorte que :
- lorsque le véhicule est en mode travail, la pression hydraulique présente dans le vérin de blocage (116) s'oppose à l'effort du ressort (117), le piston (114) du vérin étant en position haute, et la platine reliant les barres de direction (103, 104) pouvant alors pivoter,
- lorsque le véhicule est en mode route, le vérin de blocage (116) n'est plus alimenté en puissance hydraulique et lorsque les roues avant et arrières sont alignées, la tête du piston traverse un logement (110) de la platine supérieure et se bloque dans un logement conique (111) de la platine inférieure ce qui entraîne le blocage de l'essieu arrière.

2. Véhicule selon la revendication 1, la platine inférieure (108) est rendue mobile en rotation autour d'un axe vertical (123) sous l'action des vérins (101, 102) et barres (103, 104) et elle comporte un logement conique (111) traversant et décentré par rapport audit axe (123), ledit logement (111) décrivant au cours du mouvement de la platine inférieure (108), une trajectoire en arc de cercle (124) de part et d'autre d'une position médiane où il se trouve aligné avec l'axe du logement cylindrique (110).

3. Véhicule selon l'une des revendications 1 à 2, **caractérisé en ce que** le vérin est équipé d'au moins un détecteur de fin de course.

4. Véhicule selon l'une des revendications 1 à 3, **caractérisé en ce qu'**il comporte un système d'asservissement de l'angle des roues arrières sur l'angle des roues avant qui pilote un bloc hydraulique d'alimentation des vérins de direction arrière (101, 102).

5. Véhicule selon l'une des revendications 1 à 4 **caractérisé en ce qu'**en cas de dysfonctionnement hydraulique le vérin de blocage (116) est automatiquement désactivé.

6. Véhicule selon l'une au moins des revendications 1 à 5, **caractérisé en ce qu'**il comporte un système de liaison entre le châssis (202) et un essieu (203) d'un train de roues maintenant les ressorts verticaux avec un entraxe (2x) calqué sur la voie du véhicule.

7. Véhicule selon la revendication 6, **caractérisé en ce que** la liaison entre le châssis (202) et un essieu (203) réalisée par deux armatures de déport (205) fixes, chacune ayant une extrémité (206) montée fixe sur l'essieu (203) et entre les deux roues, et dont l'autre extrémité (207), placée au voisinage d'une roue, porte le châssis par l'intermédiaire d'un ressort (208) travaillant en compression.

8. Véhicule selon la revendication 7 **caractérisé en ce qu'**il comporte encore un dispositif amortisseur composé de deux vérins amortisseurs (211), chacun monté verticalement, entre d'une part une traverse (202) du châssis et d'autre part une des armatures de déport (205).

9. Véhicule selon l'une des revendications 7 à 8, **caractérisé en ce que** les deux armatures de déport (205) sont placées symétriquement par rapport au plan médian (P) du châssis du véhicule, leur forme et leurs dimensions permettant de surélever les ressorts et de les placer à l'aplomb des roues, et au-dessus de celle-ci.

10. Véhicule selon la revendication 6, **caractérisé en ce que** la liaison entre le châssis et l'essieu est réalisée par une structure en "U" évasée vers le haut (227), reprenant la base des ressorts et permettant de dégager une zone (217) dans la partie supérieure du système de suspension (201).

11. Véhicule selon la revendication 10, **caractérisé en ce que** les ressorts sont dédoublés et disposés par paires sur le devant et sur l'arrière de chaque roue.

12. Véhicule selon la revendication 6, **caractérisé en ce que** la liaison entre le châssis et l'essieu est réalisée par deux bras (218a et 218b) disposés parallèlement au plan de roulement d'une roue et à l'intérieur de celle-ci, chacun des bras ayant ses extrémités recourbées à 90° et portant chacune un ressort (220 et 221), de telle sorte que chaque paire de ressorts (220 et 221) puisse pivoter dans un plan horizontal, autour d'une roue pendant chaque opération de braquage.

13. Véhicule selon la revendication 12, **caractérisé en ce que** chaque ressort est monté en compression entre un plateau (222, 223) solidaire d'une extrémité d'un bras (218a, 218b) et la sous-face du châssis.

14. Véhicule selon l'une des revendications 1 à 13 **caractérisé en ce que** le dispositif à ressort est complété par deux butées en caoutchouc (210) montées à l'intérieur de chacun des ressorts pour limiter le déplacement vertical de la traverse (202) en cas de choc.

## Claims

1. Cleaning vehicle for roads, **characterised in that** it is of the type comprising a chassis supporting a control cab and equipped with four guiding wheels, the movement of the forward direction being ensured by mechanical and hydraulic elements (cylinders and rods) and the rear direction being controlled in the front direction according to the same principle with the direction cylinders (101, 102) and rods or connecting rods (103, 104) associated with the rear axle (105), and **characterised in that** it comprises a device for the mechanical locking (106) of the rear axle formed by a mechanical interface (107) consisting of a lower, pivoting plate and an upper fixed plate (109), and a locking vertical cylinder (116) connected to a spring (117) and equipped with a joint (118) for providing a seal between the two plates such that:
- when the vehicle is in operating mode, the hydraulic pressure present in the locking cylinder (116) opposes the effort of the spring (117), the piston (114) of the cylinder being in a high position and the board connecting the direction rods (103, 104) being able to then pivot,
- when the vehicle is in driving mode, the locking cylinder (116) is no longer supplied with hydraulic power and when the front and rear wheels are aligned the head of the piston traverses a housing (110) of the upper plate and locks in a conical housing (111) of the lower plate which involves the locking of the rear axle.

2. Vehicle according to claim 1, the lower plate (108) is movable in rotation around a vertical axis (123) under the action of cylinders (101, 102) and rods (103, 104) and it comprises a traversing conical housing (111) which is off-centre in relation to said axis (123), said housing (111) describing during the movement of the lower plate (108) a trajectory in the form of an arc of a circle (124) on either side of a median position where it is aligned with the axis of the cylindrical housing (110).

3. Vehicle according to either of claims 1 to 2, **characterised in that** the cylinder is equipped with at least one end detector.

4. Vehicle according to any one of claims 1 to 3, **characterised in that** it comprises a system for controlling the angle of the rear wheels to the angle of the front wheels, which steers a hydraulic block for supplying the rear direction cylinders (101, 102).

5. Vehicle according to any one of claims 1 to 4, **characterised in that** in the case of the hydraulic dysfunction the locking cylinder (116) is automatically deactivated.

6. Vehicle according to at least one of claims 1 to 5, **characterised in that** it comprises a system for connecting between the chassis (202) and an axle (203) of a wheel-set maintaining the vertical springs with a centre-line (2x) traced on the path of the vehicle.

7. Vehicle according to claim 6, **characterised in that** the connection between the chassis (202) and an axle (203) formed by two fixed offset armatures (205), each having one end (206) fixed onto the axle (203) and between the two wheels, and the other end of which (207), placed adjacent to a wheel, supports the chassis by means of a spring (208) operating by compression.

8. Vehicle according to claim 7, **characterised in that** it also comprises a shock absorbing device composed of two shock absorbing cylinders (211), each mounted vertically between on the one hand a crossbar (202) of the chassis and on the other hand one of the offset armatures (205).

9. Vehicle according to any one of claims 7 to 8, **characterised in that** the two offset armatures (205) are positioned symmetrically in relation to the median plane (P) of the chassis of the vehicle, their form and their dimensions making it possible to raise the springs and to place them in line with the wheels and above the latter.

10. Vehicle according to claim 6, **characterised in that** the connection between the chassis and the axle is formed by a "U" structure flared at the top (227), picking up the base of the springs and making it possible to clear an area (217) in the upper part of the suspension system (201).

11. Vehicle according to claim 10, **characterised in that** the springs are split and arranged in pairs at the front and at the rear of each wheel.

12. Vehicle according to claim 6, **characterised in that** the connection between the chassis and the axle is formed by two arms (218a and 218b) arranged in parallel to the rolling plane of a wheel and to the inside of the latter, each of the arms having their ends bent by 90° and each one bearing a spring (220 and 221), such that each pair of springs (220 and 221) can pivot in a horizontal plane around a wheel during each angle locking operation.

13. Vehicle according to claim 12, **characterised in that** each spring is mounted in compression between a plate (222, 223) joined to one end of an arm (218a, 218b) and the lower face of the chassis.

14. Vehicle according to any one of claims 1 to 13, **characterised in that** the spring device is completed by two rubber abutments (210) mounted on the inside of each of the springs for limiting the vertical displacement of the crossbar (202) in case of shock.

## Patentansprüche

1. Fahrzeug zur Straßenreinigung, **dadurch gekennzeichnet, dass** es von der Art ist, die über ein Chassis verfügt, das ein Führerhaus aufweist und mit vier lenkbaren Rädern ausgestattet ist, wobei die Vorwärtsbewegung des Fahrzeugs durch mechanische und hydraulische Elemente (Zylinder und Stangen) sichergestellt ist und wobei die Rückwärtsrichtung entsprechend der Vorwärtsrichtung auf der Grundlage desselben Prinzips mit Lenkzylindern (101, 102) und mit der Hinterachse (105) verbundenen Stangen oder Pleuelstangen (103, 104) eingerichtet ist, und **dadurch gekennzeichnet, dass** es eine Vorrichtung zum mechanischen Feststellen (106) der Hinterachse aufweist, die durch eine mechanische Schnittstelle (107) gebildet ist, die über eine untere schwenkbare Platte und über eine obere feststehende Platte (109) sowie über einen senkrechten Blockierzylinder (116) verfügt, der mit einer Feder (117) verbunden und mit einem Gelenk (118) ausgestattet ist, wodurch eine Abdichtung zwischen den beiden Platten eingerichtet ist, so dass
- mit dem Fahrzeug im Arbeitsmodus der in dem Blockierzylinder (116) vorhandene Hydraulikdruck der Spannung der Feder (117) entgegenwirkt, wobei der Kolben (114) des Zylinders in der oberen Stellung ist, und wodurch die die Lenkstangen (103, 104) verbindende Platte schwenkbar ist,
- mit dem Fahrzeug im Fahrmodus dem Blockierzylinder (116) keine hydraulische Kraft mehr zugeführt ist, und dass bei fluchtenden Vorder- und Hinterrädern der Kopf des Kolben eine Aufnahme (110) in der oberen Platte durchläuft und in einer kegelförmigen Aufnahme (111) der unteren Platte festsitzt, was zu dem Feststellen der Hinterachse führt.

2. Fahrzeug nach Anspruch 1, wobei die untere Platte (108) um eine senkrechte Achse (123) durch die Einwirkung der Zylinder (101, 102) und der Stangen (103, 104) drehbeweglich ist und sie eine kegelförmige durchquerende Aufnahme (111) aufweist, die in Bezug auf die Achse (123) exzentrisch ist, wobei die Aufnahme (111) während der Bewegung der unteren Platte (108) einen kreisbogenförmigen Weg (124) zu beiden Seiten einer Mittelstellung beschreibt, wo sie mit der Achse der zylindrischen Aufnahme (110) fluchtet.

3. Fahrzeug nach einem der Ansprüche 1 bis 2, **dadurch gekennzeichnet, dass** der Zylinder mit wenigstens einem Endstellungsdetektor ausgestattet ist.

4. Fahrzeug nach einem der Ansprüche 1 bis 3, **dadurch gekennzeichnet, dass** es ein Regelungssystem für den Winkel der Hinterräder in Bezug auf den Winkel der Vorderräder aufweist, das einen hydraulischen Zuführblock der rückwärtigen Lenkzylinder (101, 102) steuert.

5. Fahrzeug nach einem der Ansprüche 1 bis 4, **dadurch gekennzeichnet, dass** im Falle einer hydraulischen Fehlfunktion der Blockierzylinder (116) automatisch deaktiviert ist.

6. Fahrzeug nach wenigstens einem der Ansprüche 1 bis 5, **dadurch gekennzeichnet, dass** es ein Verbindungssystem zwischen dem Chassis (202) und einer Achse (203) eines Achssatzes aufweist, das die senkrechten Federn mit einem auf der Grundlage des Radstands berechneten Abstand (2x) hält.

7. Fahrzeug nach Anspruch 6, **dadurch gekennzeichnet, dass** die Verbindung zwischen dem Chassis (202) und der Achse (203) durch zwei feste Versatzgestellteile (205) geschaffen ist, die jeweils ein fest an der Achse (203) und ein zwischen den zwei Rädern angebrachtes Ende (206) aufweisen und wobei das andere, benachbart zu einem Rad angeordnete Ende (207) über eine Feder (208) das Chassis trägt, die mit Kompression arbeitet.

8. Fahrzeug nach Anspruch 7, **dadurch gekennzeichnet, dass** es weiterhin eine Stoßdämpfervorrichtung aufweist, die über zwei jeweils senkrecht zwischen einerseits einer Querstrebe (202) des Chassis und andererseits einem der Versatzgestellteile (205) angeordnete Stoßdämpferzylinder (211) verfügt.

9. Fahrzeug nach einem der Ansprüche 7 bis 8, **dadurch gekennzeichnet, dass** die zwei Versatzgestellteile (205) symmetrisch in Bezug auf die Mittelebene (P) des Chassis des Fahrzeugs angeordnet sind, wobei es ihre Gestalt und ihre Abmessungen gestatten, die Federn hochzuziehen und sie rechtwinklig zu den Rädern und über diesen anzuordnen.

10. Fahrzeug nach Anspruch 6, **dadurch gekennzeichnet, dass** die Verbindung zwischen dem Chassis und der Achse durch eine U-förmige Struktur geschaffen ist, die nach oben (227) hin erweitert ist sowie die Basis der Federn wiederaufnimmt und die es gestattet, einen Bereich (217) in dem oberen Teil des Aufhängungssystems (201) freizumachen.

11. Fahrzeug nach Anspruch 10, **dadurch gekennzeichnet, dass** die Federn verdoppelt und paarweise auf der Vorderseite sowie auf der Hinterseite jedes Rads angeordnet sind.

12. Fahrzeug nach Anspruch 6, **dadurch gekennzeichnet, dass** die Verbindung zwischen dem Chassis und der Achse durch zwei Arme (218a und 218b) gebildet ist, die parallel zu der Drehebene eines Rads und innerhalb von diesem angeordnet sind, wobei die Enden jedes Arms um 90° gebogen sind und eine Feder (220 und 221) aufweisen, so dass jedes Federpaar (220 und 221) während jedes Einschlagvorgangs in einer horizontalen Ebene um ein Rad schwenkbar ist.

13. Fahrzeug nach Anspruch 12, **dadurch gekennzeichnet, dass** jede Feder im zusammengedrückten Zustand zwischen einer einstückig mit einem Ende eines Arms (218a, 218b) ausgebildeten Scheibe (222, 223) und der Unterseite des Chassis angebracht ist.

14. Fahrzeug nach einem der Ansprüche 1 bis 13, **dadurch gekennzeichnet, dass** die Federvorrichtung mit zwei Gummianschlägen (210) vervollständigt ist, die im Inneren jeder Feder angebracht sind, um eine senkrechte Verschiebung der Querstrebe (202) im Falle eines Stoßes zu begrenzen.
